# EUROPEAN PATENT APPLICATION

(11) **EP 4 819 691 A1**
(43) Date of publication of application: **07.10.2026**
(21) Application number: 24911038.8
(22) Date of filing: 23.12.2024
(51) Int. Cl.: H04W 40/22

(54) **METHOD AND APPARATUS FOR TRANSMITTING DATA, RELAY DEVICE, NETWORK DEVICE, AND MEDIUM**

(30) Priority: 27.12.2023 CN 202311830482
(71) Applicant: Vivo Mobile Communication Co., Ltd., Dongguan, Guangdong 523863 (CN)
(72) Inventor: MAO, Yuanze, Dongguan, Guangdong 523863 (CN)
(74) Representative: Murgitroyd & Company
(86) International application number: PCT/CN2024/141490
(87) International publication number: WO 2025/140110

(57) **Abstract**

This application discloses a data transmission method and apparatus, a relay device, a network device, and a medium, and pertains to the field of communication technologies. The method includes: A first relay device sends a second data packet to a target device, and sends a third data packet to the target device by using a second relay device in a case that a quantity of first data packets exceeds a first threshold. The first relay device is a relay device in a first relay device cluster, the first relay device cluster includes N relay devices, the target device includes a network device or target UE corresponding to the first relay device cluster, and N is an integer greater than 1. The first data packet is a data packet accumulated in the first relay device, and the first data packet includes the second data packet and the third data packet. The second relay device is a relay device in the first relay device cluster, and the second relay device is different from the first relay device.

## Description

### CROSS-REFERENCE TO RELATED APPLICATIONS

This application claims priority to Chinese Patent Application No. 202311830482.9, filed with the China National Intellectual Property Administration on December 27, 2023 and entitled "DATA TRANSMISSION METHOD AND APPARATUS, RELAY DEVICE, NETWORK DEVICE, AND MEDIUM" which is incorporated by reference in its entirety.

### TECHNICAL FIELD

This application pertains to the field of communication technologies, and specifically, to a data transmission method and apparatus, a relay device, a network device, and a medium.

### BACKGROUND

Currently, when user equipment (UE) is located outside network coverage or in a weak signal area at an edge of a network device, the UE needs to implement data transmission with the network device by using a relay device. Usually, the UE randomly selects a relay device for data transmission with the network device.

However, if signal quality of the relay device selected by the UE is not good enough, abnormal data transmission between the UE and the network device is caused, for example, problems such as a failed call, a slow network access speed, and a slow downloading speed may be caused; or a ping-pong behavior of continuously switching a relay device by the UE is caused. Consequently, efficiency of data transmission between the UE and the network device is poor.

### SUMMARY

An objective of embodiments of this application is to provide a data transmission method and apparatus, a relay device, a network device, and a medium. This can improve efficiency of data transmission between UE and the network device.

According to a first aspect, an embodiment of this application provides a data transmission method. The method includes: A first relay device sends a second data packet to a target device, and sends a third data packet to the target device by using a second relay device in a case that a quantity of first data packets exceeds a first threshold. The first relay device is a relay device in a first relay device cluster, the first relay device cluster includes N relay devices, the target device includes a network device or target UE corresponding to the first relay device cluster, and N is an integer greater than 1. The first data packet is a data packet accumulated in the first relay device, and the first data packet includes the second data packet and the third data packet. The second relay device is a relay device in the first relay device cluster, and the second relay device is different from the first relay device.

According to a second aspect, an embodiment of this application provides a data transmission method. The method includes: A network device receives cluster information of at least one relay device cluster from a third relay device. The at least one relay device cluster corresponds to the network device. The network device determines, in the at least one relay device cluster based on cluster information of each relay device cluster, a first relay device cluster that matches a network state of the network device. The network device sends cluster information of the first relay device cluster to target UE by using the third relay device. The first relay device cluster includes N relay devices, the cluster information of the first relay device cluster is used to indicate the target UE to access a first relay device in the first relay device cluster, and N is an integer greater than 1.

According to a third aspect, an embodiment of this application provides a data transmission apparatus. The apparatus includes: a sending module. The sending module is configured to: send a second data packet to a target device, and send a third data packet to the target device by using a second relay device in a case that a quantity of first data packets exceeds a first threshold. The first relay device is a relay device in a first relay device cluster, the first relay device cluster includes N relay devices, the target device includes a network device or target UE corresponding to the first relay device cluster, and N is an integer greater than 1. The first data packet is a data packet accumulated in the first relay device, and the first data packet includes the second data packet and the third data packet. The second relay device is a relay device in the first relay device cluster, and the second relay device is different from the first relay device.

According to a fourth aspect, an embodiment of this application provides a data transmission apparatus. The apparatus includes: a receiving module, a determining module, and a sending module. The receiving module is configured to: receive cluster information of at least one relay device cluster from a third relay device, where the at least one relay device cluster corresponds to a network device. The determining module is configured to: determine, in the at least one relay device cluster based on cluster information of each relay device cluster received by the receiving module, a first relay device cluster that matches a network state of the network device. The sending module is configured to: send, to target UE by using the third relay device, cluster information of the first relay device cluster determined by the determining module. The first relay device cluster includes N relay devices, the cluster information of the first relay device cluster is used to indicate the target UE to access a first relay device in the first relay device cluster, and N is an integer greater than 1.

According to a fifth aspect, an embodiment of this application provides a relay device. The relay device includes a processor and a memory. The memory stores a program or an instruction that can run on the processor, and the program or the instruction implements, when executed by the processor, steps of the method according to the first aspect.

According to a sixth aspect, an embodiment of this application provides a network device. The network device includes a processor and a memory. The memory stores a program or an instruction that can run on the processor, and the program or the instruction implements, when executed by the processor, steps of the method according to the second aspect.

According to a seventh aspect, an embodiment of this application provides a readable storage medium. The readable storage medium stores a program or an instruction, and the program or the instruction, when executed by a processor, implements steps of the method according to the first aspect, or implements steps of the method according to the second aspect.

According to an eighth aspect, an embodiment of this application provides a wireless communication system, including a relay device and a network device. The relay device is configured to perform steps of the method according to the first aspect, and the network device is configured to perform steps of the method according to the second aspect.

According to a ninth aspect, an embodiment of this application provides a chip. The chip includes a processor and a communication interface, the communication interface is coupled to the processor, and the processor is configured to run a program or an instruction, to implement the method according to the first aspect, or implement the method according to the second aspect.

According to a tenth aspect, an embodiment of this application provides a computer program/program product. The computer program/program product is stored in a storage medium, and the program/program product is executed by at least one processor, to implement the method according to the first aspect, or implement the method according to the second aspect.

In embodiments of this application, a first relay device sends a second data packet to a target device, and sends a third data packet to the target device by using a second relay device in a case that a quantity of first data packets exceeds a first threshold. The first relay device is a relay device in a first relay device cluster, the first relay device cluster includes N relay devices, the target device includes a network device or target UE corresponding to the first relay device cluster, and N is an integer greater than 1. The first data packet is a data packet accumulated in the first relay device, and the first data packet includes the second data packet and the third data packet. The second relay device is a relay device in the first relay device cluster, and the second relay device is different from the first relay device. According to this solution, in a case that a quantity of data packets accumulated in the first relay device exceeds the first threshold, a plurality of relay devices in the first relay device cluster in which the first relay device is located may cooperate to jointly transmit a data packet to the network device or the target UE. Therefore, a rate of cooperatively transmitting a data packet by using a relay device can be improved, and a delay of data transmission can be reduced, to improve efficiency of data transmission between the UE and the network device.

### BRIEF DESCRIPTION OF THE DRAWINGS

FIG. 1 is a schematic diagram of a possible structure of a communication system related in an embodiment of this application;
FIG. 2 is a schematic diagram of an instance in which remote UE performs data transmission with a network device by using a relay device according to an embodiment of this application;
FIG. 3 is a first flowchart of a data transmission method according to an embodiment of this application;
FIG. 4 is a schematic diagram of an instance in which a network device transmits data to a mobile phone by using a relay device according to an embodiment of this application;
FIG. 5 is a schematic diagram of an instance in which a mobile phone transmits data to a network device by using a relay device according to an embodiment of this application;
FIG. 6 is a second flowchart of a data transmission method according to an embodiment of this application;
FIG. 7 is a flowchart of a data transmission method according to an embodiment of this application;
FIG. 8 is a schematic diagram of an instance of a range in which a relay device cluster corresponding to a network device is located according to an embodiment of this application;
FIG. 9 is a flowchart of a data transmission method according to an embodiment of this application;
FIG. 10 is a first flowchart of an instance of a data transmission method according to an embodiment of this application;
FIG. 11 is a second flowchart of an instance of a data transmission method according to an embodiment of this application;
FIG. 12 is a schematic diagram of a structure of a data transmission apparatus according to an embodiment of this application;
FIG. 13 is a schematic diagram of a structure of a data transmission apparatus according to an embodiment of this application;
FIG. 14 is a schematic diagram of a structure of a communication device according to an embodiment of this application;
FIG. 15 is a schematic diagram of a hardware structure of a relay device according to an embodiment of this application; and
FIG. 16 is a schematic diagram of a hardware structure of a network device according to an embodiment of this application.

### DETAILED DESCRIPTION

The following clearly describes the technical solutions in embodiments of this application with reference to the accompanying drawings in embodiments of this application. Apparently, the described embodiments are some but not all of the embodiments of this application. All other embodiments obtained by a person of ordinary skill in the art based on embodiments of this application shall fall within the protection scope of this application.

In this application, terms "first", "second", and the like are used to distinguish similar objects but are not used to describe a specific order or sequence. It should be understood that, the terms used in such a way is interchangeable in proper circumstances, so that embodiments of this application can be implemented in an order other than the order illustrated or described herein. Objects classified by "first" and "second" are usually of a same type, and a quantity of objects is not limited. For example, there may be one or more first objects. In addition, "or" in this application represents at least one of connected objects. For example, "A or B" covers three solutions, that is, a solution 1: including A and excluding B; a solution 2: including B and excluding A; a solution 3: including both A and B. A character "/" generally indicates an "or" relationship between the associated objects.

A term "indication" in this application may be a direct indication (or an explicit indication), or may be an indirect indication (or an implicit indication). The direct indication may be understood as that a sending party explicitly notifies a receiving party of content such as specific information, an operation that needs to be performed, or a request result in a sent indication. The indirect indication may be understood as that a receiving party determines corresponding information based on an indication sent by a sending party, or performs determining and determines an operation that needs to be performed or a request result based on a determining result.

It should be noted that the technology described in embodiments of this application is not limited to a long term evolution (LTE)/LTE-Advanced (LTE-A) system, and may further be applied to another wireless communication system, such as code division multiple access (CDMA), time division multiple access (TDMA), frequency division multiple access (FDMA), orthogonal frequency division multiple access (OFDMA), single-carrier frequency division multiple access (SC-FDMA), or another system. Terms "system" and "network" in embodiments of this application are usually used interchangeably, and the described technologies can be applied to the systems and radio technologies mentioned above, and may be applied to other systems and radio technologies. The following descriptions describe a new radio (NR) system for example purposes, and NR terms are used in most of the following descriptions. However, the technologies may also be applied to a system other than the NR system, for example, the 6th generation (6G) communication system.

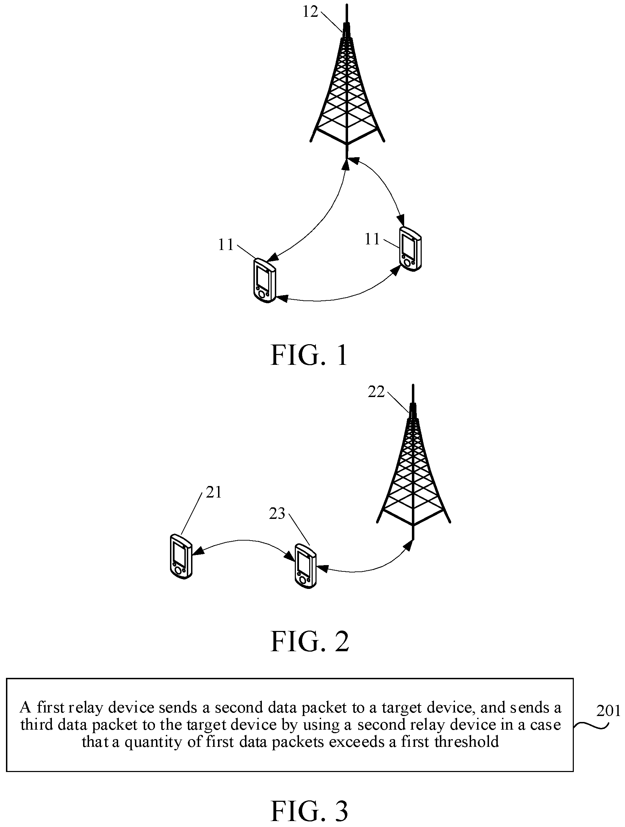

FIG. 1 is a block diagram of a wireless communication system to which an embodiment of this application may be applied. The wireless communication system includes a terminal 11 and a network device 12.

The terminal 11 may be a terminal side device, for example, UE, a mobile phone, a tablet computer (Tablet Personal Computer), a laptop computer (Laptop Computer), a notebook computer, a personal digital assistant (PDA), a palmtop computer, a netbook, an ultra-mobile personal computer (UMPC), a mobile internet device (MID), an augmented reality (AR) device, a virtual reality (VR) device, a robot, a wearable device (Wearable Device), a flight vehicle (flight vehicle), a vehicle-mounted device (Vehicle User Equipment, VUE), a ship-mounted device, pedestrian user equipment (PUE), a smart home device (a home device having a wireless communication function, such as a refrigerator, a television, a washing machine, or furniture), a game machine, a personal computer (PC), a teller machine, or a self-help machine. The wearable device includes: a smartwatch, a smart band, a smart earphone, smart glasses, smart headwear (a smart bracelet, a smart hand chain, a smart ring, a smart necklace, a smart anklet, a smart ankle chain, and the like), a smart wristband, smart clothing, and the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network device 12 may include an access network device or a core network device. The access network device may also be referred to as a radio access network (RAN) device, a radio access network function, or a radio access network unit. The access network device may include a base station, a wireless local area network (WLAN) access point (AS), a wireless fidelity (Wi-Fi) node, or the like. The base station may be referred to as a Node B (NB), an evolved Node B (eNB), a next generation Node B (gNB), a new radio Node B (NR Node B), an access point, a relay base station (RBS), a serving base station (SBS), a base transceiver station (BTS), a radio base station, a radio transceiver, a basic service set (BSS), an extended service set (ESS), a home Node B (HNB), a home evolved Node B (home evolved Node B), a transmission reception point (TRP), or some other suitable term in the art. As long as same technical effects are achieved, the base station is not limited to a specific technical word. It should be noted that, in this embodiment of this application, the base station in an NR system is merely used as an example for description, and a specific type of the base station is not limited.

In this embodiment of this application, the network device may correspond to at least one relay device cluster. For example, one base station corresponds to at least one relay device cluster. In other words, the communication system may include UE, a network device, and at least one relay device cluster.

In this embodiment of this application, the at least one relay device cluster may include a relay device within a preset distance around the network device. It may be understood that, the relay device within the preset distance around the network device may be classified into at least one relay device cluster based on a location of the relay device.

In this embodiment of this application, each relay device cluster of the at least one relay device cluster may include at least one relay device.

In this embodiment of this application, the foregoing relay device may include, but is not limited to, UE, a mobile phone, a tablet computer, and a wearable device.

A data transmission method and apparatus, a relay device, a network device, and a medium that are provided in embodiments of this application are described in detail below by using some embodiments and application scenarios thereof with reference to the accompanying drawings.

The data transmission method and apparatus, the relay device, the network device, and the medium provided in embodiments of this application may be applied to a scenario in which UE performs data transmission with the network device by using a relay device cluster.

Currently, the 3rd generation partnership project (3rd Generation Partnership Project, 3GPP) R16 version introduces a sidelink communication (NR Sidelink) technology between devices, mainly focuses on a road safety service related to vehicle to everything (vehicle to everything, V2X) information exchange, and implements broadcast, multicast, and unicast communication between terminals in a network-in-coverage scenario and a network-out-coverage scenario. On the basis of this, to further extend coverage of a network and the NR sidelink, improve power efficiency, and support a wider range of applications and services, the 3GPP introduced a UE-to-Network Relay (UE-to-Network Relay, U2N Relay) technology in the R17 version. As shown in FIG. 2, when quality of a link between remote UE 21 and a network device 22 becomes poor, the remote UE 11 may select a suitable relay device 23 and ensure service continuity by using the U2N relay technology.

Generally, when selecting a relay device to process a communication service problem, UE usually randomly selects a device whose signal quality satisfies a threshold for data transmission, and does not determine that the currently selected relay device is the optimal or most suitable relay device. Therefore, if the signal quality of the selected relay device is not good enough, data transmission may be abnormal, for example, problems such as a failed call, a slow network access speed, and a slow downloading speed may be caused, or a ping-pong behavior of switching a relay device continuously may be caused. Consequently, efficiency of data transmission between the UE and the network device is poor.

According to the data transmission method and apparatus, the relay device, the network device, and the medium provided in embodiments of this application, in a case that a quantity of data packets accumulated in a first relay device exceeds a first threshold, a plurality of relay devices in a first relay device cluster in which the first relay device is located may cooperate to jointly transmit a data packet to the network device or target UE. Therefore, a rate of cooperatively transmitting a data packet by using a relay device can be improved, and a delay of data transmission can be reduced, to improve efficiency of data transmission between the UE and the network device.

An execution body of the data transmission method provided in this embodiment of this application may be a data transmission apparatus. For example, the data transmission apparatus may be a communication device, such as a relay device or a network device, or may be a component, such as an integrated circuit or a chip, in the communication device.

An embodiment of this application provides a data transmission method. FIG. 3 is a flowchart of a data transmission method according to an embodiment of this application. The method may be performed by a first relay device. To be specific, the following provides an example description of the data transmission method provided in this embodiment of this application by using the first relay device as an example.

As shown in FIG. 3, the data transmission method provided in this embodiment of this application may include the following step 201.

Step 201: A first relay device sends a second data packet to a target device, and sends a third data packet to the target device by using a second relay device in a case that a quantity of first data packets exceeds a first threshold.

The first relay device is a relay device in a first relay device cluster, the first relay device cluster includes N relay devices, the target device includes a network device or target UE corresponding to the first relay device cluster, and N is an integer greater than 1. The first data packet is a data packet accumulated in the first relay device, and the first data packet includes the second data packet and the third data packet. The second relay device is a relay device in the first relay device cluster, and the second relay device is different from the first relay device.

In some embodiments of this application, the target UE may be a device that needs to perform data transmission, and the network device may be a device that provides a network service for the target UE.

In some embodiments of this application, the second relay device is at least one of other relay devices except the first relay device in the N relay devices in the first relay device cluster.

In this embodiment of this application, the first data packet may include a data packet received by the first relay device.

In some embodiments of this application, in a process in which the target UE and the network device perform data transmission by using the first relay device, the first relay device may forward, to the second relay device, a data packet that is accumulated and that is not sent to the target device in time, so that the first relay device and the second relay device may cooperatively send the data packet to the target device.

It may be understood that, the target UE may be a device located at an edge of a communication range of the network device or located outside the communication range of the network device. In this way, the target UE and the network device may perform data transmission by using the first relay device.

In some embodiments of this application, the network device corresponds to at least one relay device cluster, and the first relay device cluster is one of the at least one relay device cluster.

In some embodiments of this application, the foregoing "a quantity of first data packets exceeds a first threshold" may indicate that: there are a large quantity of first data packets, resulting in a long process in which the first relay device sends the first data packets to the target device. Therefore, the second relay device and the first relay device need to cooperate to jointly send the first data packet to the target device, to improve a transmission rate of the data packet.

In some embodiments of this application, in a case that the first relay device receives a large quantity of data packets, the first relay device may distribute a part of data packets in the first data packet to the at least one relay device of the other relay devices except the first relay device in the first relay device cluster, and cooperatively transmits the first data packet by using the at least one relay device, to improve a transmission rate of the first data packet.

It may be understood that, the first relay device may first establish a connection to the at least one relay device in the other relay devices except the first relay device in the first relay device cluster, and then send the third data packet in the first data packet to the at least one relay device. After receiving the third data packet, the at least one relay device may send the third data packet to the target device. In this way, through cooperative transmission of a plurality of relay devices in the first relay device cluster, a rate of data transmission between the target UE and the network device can be improved.

In some embodiments of this application, the first threshold may be set by the first relay device by default, or may be set by a user. This is not specifically limited in this embodiment of this application.

In some embodiments of this application, after the first relay device sends the second data packet to the target device and sends the third data packet to the target device by using the second relay device, the target device may send feedback information corresponding to the second data packet to the first relay device and send feedback information corresponding to the third data packet to the second relay device after receiving the second data packet and the third data packet. Then, the second relay device may send the received feedback information to the first relay device. The first relay device sends the feedback information to a data packet sending device after comprehensive processing, so that the data packet sending device may determine whether the data packet is successfully transmitted.

In some embodiments of this application, after receiving the second data packet and the third data packet, the target device may decode and reorder the second data packet and the third data packet, to determine whether transmission of the data packets is completed. It may be understood that, if a data packet is not transmitted within specific time, the target device may determine to discard the data packet, and send corresponding feedback information to the first relay device and the second relay device.

In some embodiments of this application, after the second relay device sends the received feedback information to the first relay device, the first relay device may determine a transmission state of each data packet, for example, successful transmission or failed transmission. Then, the first relay device may generate new feedback information after performing comprehensive parsing processing on a plurality of pieces of received feedback information, and send the new feedback information to the data packet sending device, so that the data packet sending device may determine the transmission state of the data packet, and the data packet sending device may perform response processing based on the transmission state of the data packet, to better transmit the data packet that is transmitted again.

For example, the data packet sending device may start a retransmission mechanism or a discarding mechanism after data packet transmission fails, so that a data packet that is transmitted again can be transmitted better.

In the data transmission method provided in this embodiment of this application, in a case that a quantity of data packets accumulated in the first relay device exceeds the first threshold, the plurality of relay devices in the first relay device cluster in which the first relay device is located may cooperate to jointly transmit the data packet to the network device or the target UE. Therefore, a rate of cooperatively transmitting a data packet by using a relay device can be improved, and a delay of data transmission can be reduced, to improve efficiency of data transmission between the UE and the network device.

In some embodiments of this application, in a case that the target device includes the target UE, before step 201, the data transmission method provided in this embodiment of this application may further include the following step 202.

Step 202: The first relay device receives a data packet sent by the network device.

The first data packet may further include the data packet that is sent by the network device and that is received by the first relay device.

It may be understood that, in a case that the target device includes the target UE, the network device may send the data packet to the target UE by using the first relay device. In other words, a data packet accumulated in the first relay device may be a data packet sent by the network device or another device to the target UE.

In some embodiments of this application, in a case that the target device includes the network device, before step 201, the data transmission method provided in this embodiment of this application may further include the following step 203.

Step 203: The first relay device receives a data packet sent by the target UE.

The first data packet may further include the data packet that is sent by the target UE and that is received by the first relay device.

It may be understood that, in a case that the target device includes the network device, the target UE may send the data packet to the network device by using the first relay device. In other words, the data packet accumulated in the first relay device may be a data packet sent by the target UE or another device to the network device.

In an embodiment, for a scenario in which the target device includes the target UE, the first relay device may receive the data packet sent by the network device; and send the second data packet to the target UE, and send the third data packet to the target UE by using the second relay device in a case that a quantity of first data packets sent by the network device exceeds the first threshold.

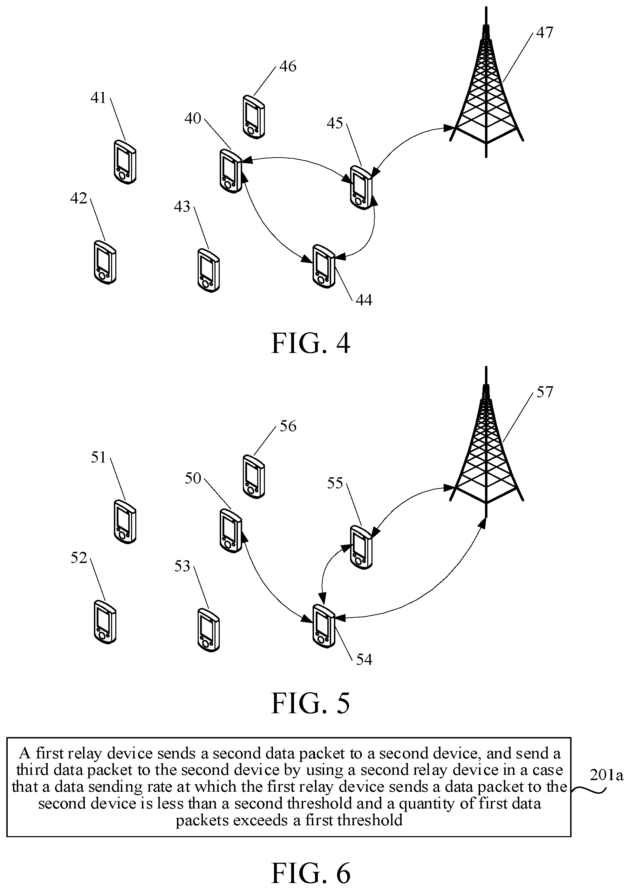

For example, as shown in FIG. 4, an example in which a relay device cluster includes a total of six relay devices: a relay device 41, a relay device 42, a relay device 43, a relay device 44, a relay device 45, and a relay device 46 is used. It is assumed that, the relay device 41, the relay device 42, and the relay device 43 form a relay device cluster 1; and the relay device 44, the relay device 45, and the relay device 46 form a relay device cluster 2. As shown in FIG. 4, it is assumed that, the data packet sending device is a network device 47, and the target device is a mobile phone 40. After the relay device 45 receives a data packet sent by the network device 47, the relay device 45 may send the third data packet to the relay device 44 in a case that a quantity of received data packets from the network device 47 exceeds the first threshold. Therefore, when the relay device 45 may send the second data packet to the mobile phone 40, the relay device 44 may send the third data packet to the mobile phone 50. In this way, efficiency of transmitting a data packet between the mobile phone 50 and the network device 47 can be improved.

In another embodiment, for a scenario in which the target device includes the network device, the first relay device may receive the data packet sent by the target UE; and send the second data packet to the network device, and send the third data packet to the network device by using the second relay device in a case that a quantity of first data packets sent by the target UE exceeds the first threshold.

For example, as shown in FIG. 5, an example in which a relay device cluster includes a total of six relay devices: a relay device 51, a relay device 52, a relay device 53, a relay device 54, a relay device 55, and a relay device 56 is used. It is assumed that, the relay device 51, the relay device 52, and the relay device 53 form a relay device cluster 1; and the relay device 54, the relay device 55, and the relay device 56 form a relay device cluster 2. As shown in FIG. 5, it is assumed that, the data packet sending device is a mobile phone 50, and the target device is a network device 57. After the relay device 54 receives a data packet sent by the mobile phone 50, the relay device 54 may send the third data packet to the relay device 55 in a case that a quantity of received data packets from the mobile phone 50 exceeds the first threshold. Therefore, when the relay device 54 sends the second data packet to the network device 57, the relay device 55 may send the third data packet to the network device 57. In this way, efficiency of transmitting a data packet between the mobile phone 50 and the network device 57 can be improved.

In this way, the target UE and the network device may cooperate, by using a plurality of relay devices in the relay device cluster, to perform data transmission. Therefore, a rate of transmitting a data packet by using a relay device can be improved, and a delay of data transmission can be reduced, to improve efficiency of data transmission between the UE and the network device.

In some embodiments of this application, with reference to FIG. 3, as shown in FIG. 6, step 201 may include the following step 201a.

Step 201a: The first relay device sends the second data packet to the target device, and sends the third data packet to the target device by using the second relay device in a case that a rate at which the first relay device sends a data packet to the target device is less than a second threshold and the quantity of first data packets exceeds the first threshold.

In some embodiments of this application, the foregoing "a data sending rate at which the first relay device sends a data packet to the target device is less than a second threshold" may indicate that: a current data sending rate at which the first relay device sends the data packet to the target device is slow, resulting in a long process in which the first relay device sends the data packet to the target device. Therefore, the second relay device and the first relay device need to cooperate to jointly send the first data packet to the target device, to improve a transmission rate of the data packet.

It may be understood that, if the data sending rate at which the first relay device sends a data packet to the target device is lower than the second threshold and the quantity of first data packets exceeds the first threshold, there may be a to-be-sent data packet accumulated in the first relay device, causing a long sending delay of a newly received data packet. Therefore, in a case that a transmission rate of a current data packet is low and a plurality of to-be-sent data packets are accumulated, the first relay device may establish a connection to the second relay device, and send the third data packet to the target device by using the second relay device when sending the second data packet to the target device, to improve a transmission rate of the data packet.

For example, an example in which the first threshold is 50 and the second threshold is 20 kb is used. In a case that the data sending rate at which the first relay device sends a data packet to the target device is less than 20 kb and the quantity of first data packets exceeds 50, the first relay device may establish a connection to the second relay device, and send the third data packet to the target device by using the second relay device when sending the second data packet to the target device, to improve a transmission rate of the data packet.

In some embodiments of this application, the second threshold may be set by the first relay device by default, or may be set by a user. This is not specifically limited in this embodiment of this application.

In this way, in a case that the data sending rate at which the first relay device sends a data packet to the target device is low and the quantity of first data packets is large, the first relay device and another relay device in the first relay device cluster may cooperate to jointly transmit a data packet to the target device. Therefore, a rate of transmitting a data packet by using a relay device can be improved, and a delay of data transmission can be reduced, to improve efficiency of data transmission between the UE and the network device.

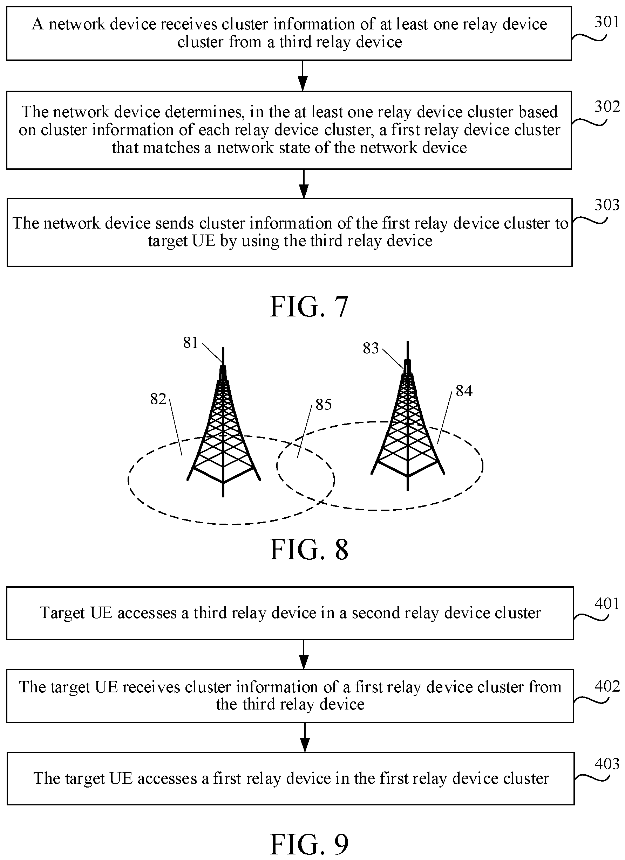

An embodiment of this application further provides a data transmission method. FIG. 7 is a flowchart of a data transmission method according to an embodiment of this application. The method may be performed by a network device. To be specific, the following provides an example description of the data transmission method provided in this embodiment of this application by using the network device as an example.

As shown in FIG. 7, the data transmission method provided in this embodiment of this application may include the following step 301 to step 303.

Step 301: The network device receives cluster information of at least one relay device cluster from a third relay device.

The at least one relay device cluster corresponds to the network device.

In some embodiments of this application, the third relay device may be any relay device in any relay device cluster of the at least one relay device cluster corresponding to the network device.

In some embodiments of this application, the third relay device may be the same as or different from the first relay device. The third relay device may be the same as or different from the second relay device.

In some embodiments of this application, each network device may determine a relay device within a preset distance around the network device as the at least one relay device cluster corresponding to the network device. It may be understood that, relay device clusters corresponding to different network devices may have overlapping ranges.

For example, as shown in FIG. 8, a range of a relay device cluster corresponding to a network device 81 is an area 82, and a range of a relay device cluster corresponding to a network device 83 is located is an area 84. An area 85 is a range of the relay device cluster corresponding to the network device 81, and is also a range of the relay device cluster corresponding to the network device 83.

In some embodiments of this application, the cluster information of the relay device cluster may include at least one of the following: capability information of the relay device cluster, signal information of the relay device cluster, and information about UE that has accessed the relay device cluster.

In some embodiments of this application, the capability information may be used for indicating at least one of the following: whether the relay device cluster supports a network for transmitting a fourth data packet and whether the relay device cluster supports a frequency band for transmitting the fourth data packet.

The fourth data packet is a data packet transmitted between target UE and the network device.

In some embodiments of this application, the network for transmitting the fourth data packet may include, but is not limited to, a long term evolution (Long Term Evolution, LTE) network, a new radio (New Radio, NR) network, a voice over long term evolution (Voice over Long Term Evolution, VOLTE) network, a video over long term evolution (Video over Long Term Evolution, VILTE) network, a voice over new radio (Voice over New Radio, VONR) network, or a voice over wireless fidelity (Voice over Wireless Fidelity, VOWIFI) network.

In some embodiments of this application, the network device may determine, according to capability information of each relay device in the relay device cluster, whether the relay device cluster supports a network transmitting the fourth data packet.

For example, that each relay device in the relay device cluster supports an LTE network may indicate that the relay device cluster may support a 4G wireless network technology.

For example, that each relay device in the relay device cluster supports an NR network may indicate that the relay device cluster may support a 5G wireless network.

For example, that each relay device in the relay device cluster supports a VOLTE network may indicate that the relay device cluster may support a voice call in a 4G network.

For example, that each relay device in the relay device cluster supports a VILTE network may indicate that the relay device cluster may support a video call in a 4G network.

For example, that each relay device in the relay device cluster supports a VONR network may indicate that the relay device cluster may support a video call in a 5G network.

For example, that each relay device in the relay device cluster supports a VOWIFI network may indicate that the relay device cluster may support making and answering voice or video calls while using a mobile internet.

In some embodiments of this application, the frequency bands for transmitting the fourth data packet may be a transmission frequency band used when the relay device transmits a data packet to the target UE and the network device.

For example, if the transmission frequency band used when the target UE and the network device transmit a data packet of a voice call is 3 MHz to 30 MHz, the relay device cluster should support transmission of a data packet with a 3 MHz to 30 MHz frequency band.

In some embodiments of this application, the signal information includes at least one of the following: reference signal receiving power (RSRP), reference signal receiving quality (RSRQ), and a signal to noise ratio (SINR) of the relay device cluster.

In some embodiments of this application, the signal information may indicate quality of a useful signal received by the relay device cluster.

For example, the RSRP may indicate strength of a signal received by the relay device cluster.

For example, the RSRQ may indicate quality of a signal received by the relay device cluster.

For example, the SINR may indicate a ratio of strength of a useful signal received by the relay device cluster to strength of a received interference signal (noise and interference).

In some embodiments of this application, the information about the UE that has accessed the relay device cluster may indicate a load status of the UE that has been accessed by the relay device cluster. It may be understood that, a larger quantity of UE accessed by the relay device cluster indicates a higher load of the relay device cluster.

In some embodiments of this application, the third relay device may obtain capability information and signal information of each relay device in different relay device clusters of relay device clusters and information about the UE that has accessed the relay device cluster, to obtain capability information and signal information of different relay device clusters and information about the UE that has accessed the relay device cluster, that is, cluster information of different relay device clusters.

For example, the third relay device may send query signaling to each relay device in different relay device clusters of relay device clusters, to obtain capability information and signal information of each relay device in different relay device clusters of the relay device clusters and information about the UE that has accessed the relay device cluster.

It should be noted that, the third relay device may query, in the relay device cluster through a PC5 interface, capability information and signal information of another relay device and information about the UE that has accessed the relay device cluster.

In some embodiments of this application, step 301 may include the following step 301a.

Step 301a: A network device periodically receives the cluster information of the at least one relay device cluster from the third relay device.

In some embodiments of this application, the network device may periodically obtain, by using the third relay device based on a preset period, capability information and signal information of each relay device in the at least one relay device cluster and information about the UE that has accessed the relay device cluster.

In this way, the network device may periodically obtain the cluster information of the at least one relay device cluster, to ensure reliability of the cluster information used by the network device.

It may be understood that, each relay device in the relay device cluster may obtain capability information and signal information of another relay device and information about the UE that has accessed the relay device cluster, so that each relay device may obtain cluster information of the relay device cluster, and send the cluster information to the network device, so that the network device may flexibly obtain the cluster information of the relay device cluster.

In some embodiments of this application, the third relay device may store and send, based on the relay device cluster, the capability information and the signal information of each relay device and information about the UE that has accessed the relay device cluster that are obtained.

For example, the third relay device may store cluster information of each relay device cluster as one list, and each element in the list may correspond to capability information and signal information of one relay device in the relay device cluster and information about the UE that has accessed the relay device cluster.

Step S302: The network device determines, in the at least one relay device cluster based on the cluster information of each relay device cluster, a first relay device cluster that matches a network state of the network device.

In some embodiments of this application, after receiving the cluster information, sent by the third relay device, of each relay device cluster of the at least one relay device cluster, the network device may parse the cluster information of each relay device cluster, to obtain capability information and signal information of each relay device of each relay device cluster and information about the UE that has accessed the relay device cluster, so that the network device may determine the first relay device cluster from the relay device clusters. Each relay device in the first relay device cluster matches the network state of the network device.

In some embodiments of this application, the "a first relay device cluster that matches a network state of the network device" in step 302 may include the following.

Capability information and signal information of the first relay device cluster match the network state of the network device.

A quantity of target UE that has accessed the relay device cluster and that is indicated by the information about the UE that is in the first relay device cluster and that has accessed the relay device cluster is less than a third threshold.

In some embodiments of this application, the network state of the network device may include a network load of the network device and quality of a network signal of the network device.

In some embodiments of this application, the foregoing "capability information and signal information of the first relay device cluster match the network state of the network device" may indicate that: information about a technology supported by the first relay device cluster, which is indicated by the capability information of the first relay device cluster, matches a network of the network device, and quality of a useful signal received by the first relay device cluster, which is indicated by the signal information of the first relay device cluster, matches quality of the network signal of the network device. In other words, the technology supported by the first relay device cluster is a technology supported by the network of the network device. In addition, a sum of the quality of the network signal of the network device and the quality of the useful signal received by the first relay device cluster needs to be greater than a quality threshold, so that data transmission with good signal quality can be successfully performed between the third relay device and the network device.

In some embodiments of this application, the foregoing "a quantity of target UE that has accessed the relay device cluster and that is indicated by the information about the UE that is in the first relay device cluster and that has accessed the relay device cluster is less than a third threshold" may indicate that: the network device needs to select a relay device cluster to which a quantity of target UE that has accessed a relay device cluster is small, so that an access load of the relay device cluster is low, to avoid data packet congestion during data transmission.

It may be understood that, the network device may determine, as the first relay device cluster, a relay device cluster for which both capability information and signal information of each relay device in the relay device cluster match the network state of the network device and a quantity of target terminals that have accessed the relay device cluster and that are indicated by the information about the UE that has accessed the relay device cluster is less than the third threshold.

In some embodiments of this application, the third threshold may be set by a developer, or may be set by the network device by default. This is not specifically limited in this embodiment of this application.

In this way, the network device may determine a relay device cluster that matches the network state of the network device based on the capability information and the signal information of the relay device cluster and the information about the UE that has accessed the relay device cluster. Therefore, the determined relay device cluster can better and more quickly transmit a data packet between the target UE and the network device, to improve efficiency of data transmission between the UE and a base station.

Step 303: The network device sends cluster information of the first relay device cluster to the target UE by using the third relay device.

The first relay device cluster includes N relay devices, the cluster information of the first relay device cluster is used to indicate the target UE to access a first relay device in the first relay device cluster, and N is an integer greater than 1.

In some embodiments of this application, after receiving the cluster information of the first relay device cluster sent by the network device, the third relay device may send the cluster information of the first relay device cluster to the target UE, and after receiving the cluster information of the first relay device cluster, the target UE may establish a connection to a relay device in the first relay device cluster. Therefore, the target UE may perform data transmission with the network device by using the at least one relay device in the first relay device cluster.

In the data transmission method provided in this embodiment of this application, the network device may determine, in the at least one corresponding relay device cluster, the relay device cluster that matches the network state of the network device, so that the target UE and the network device may perform data transmission by using the relay device cluster. Therefore, that the target UE and the network device may perform data transmission by using a relay device cluster with poor signal quality or a low transmission rate can be avoided, to improve efficiency of data transmission between the UE and the network device.

An embodiment of this application further provides a data transmission method. FIG. 9 is a flowchart of a data transmission method according to an embodiment of this application. To be specific, the following provides an example description of the data transmission method provided in this embodiment of this application by using the target UE as an example.

As shown in FIG. 9, the data transmission method provided in this embodiment of this application may include the following step 401 to step 403.

Step 401: The target UE accesses a third relay device in a second relay device cluster.

The third relay device may be any relay device in the second relay device cluster.

In some embodiments of this application, the second relay device cluster may be one relay device cluster of at least one first relay device cluster corresponding to a network device, the second relay device cluster may include M relay devices, and M is an integer greater than 1.

In some embodiments of this application, the second relay device cluster may be the same as or different from a first relay device cluster.

In some embodiments of this application, in a case that the target UE is out of coverage of the network device or is in a weak signal area at an edge of coverage of the network device, the target UE may randomly select a relay device for access, that is, the third relay device in the second relay device cluster.

For example, the target UE may send access query signaling to a relay device cluster corresponding to the network device, and randomly select any relay device in any relay device cluster around the target UE for access.

It may be understood that, in a case that the target UE is out of coverage of the network device or is in the weak signal area at the edge of coverage of the network device, signal quality of the target UE during data transmission with the network device is poor. Therefore, the target UE may perform data transmission with the network device by using the relay device.

In some embodiments of this application, the target UE may access the third relay device through a PC5 interface.

Step 402: The target UE receives cluster information of the first relay device cluster from the third relay device.

The first relay device cluster is a relay device cluster that is in relay device clusters and that matches a network state of the network device, and the network device corresponds to the relay device cluster.

Step 403: The target UE accesses a first relay device in the first relay device cluster.

In some embodiments of this application, after determining the first relay device cluster that matches the network state of the network device, the network device may send the cluster information of the first relay device cluster to the target UE by using the third relay device, so that the target UE may select the first relay device from the first relay device cluster for access. In other words, the target UE may switch an accessed relay device from the third relay device in the second relay device cluster to the first relay device in the first relay device cluster.

It may be understood that, if the first relay device cluster is the same as the second relay device cluster, the target UE does not need to switch the accessed relay device.

In some embodiments of this application, the target UE may randomly select a relay device from the first relay device cluster as the first relay device for access, or may select a relay device with good signal quality from the first relay device cluster as the first relay device for access. This is not specifically limited in this embodiment of this application.

It should be noted that, for detailed descriptions that the first relay device cluster is a relay device cluster that is in relay device clusters and that matches the network state of the network device, refer to detailed descriptions in step 301 to step 303. To avoid repetition, details are not described herein again.

In this way, because the target UE may switch the accessed relay device to a relay device in the relay device cluster based on the relay device cluster that is determined by the network device and that matches the network state, it can be ensured that the used relay device cluster is optimal when the target UE performs data transmission with the network device, to improve efficiency of data transmission between the UE and the network device by using the relay device cluster.

The foregoing method embodiments or various possible implementations of the method embodiments may be separately performed, or any two or more may be performed in combination with each other. Specifically, the method embodiments or the possible implementations may be determined based on an actual use requirement, which is not limited in embodiments of this application.

The following provides example descriptions of the data transmission method provided in embodiments of this application by using specific examples.

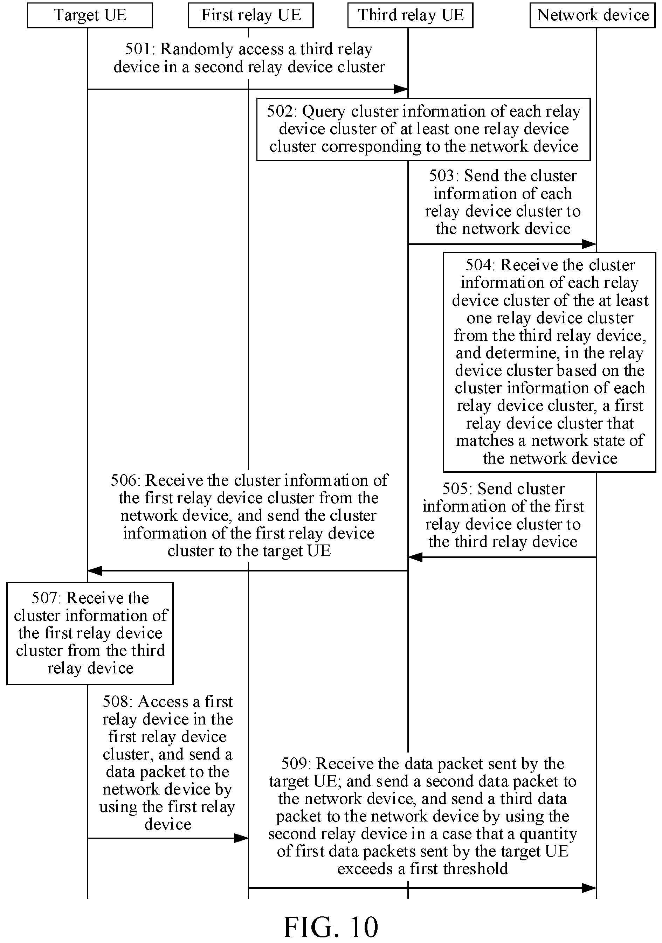

Embodiment 1: An example in which a data packet sending device is target UE and a target device is a network device is used. As shown in FIG. 10, the data transmission method may include the following step 501 to step 509.

Step 501: The target UE randomly accesses a third relay device in a second relay device cluster.

In some embodiments of this application, the second relay device cluster is from a relay device cluster, the relay device cluster includes at least one relay device cluster, and each relay device cluster includes at least one relay device.

Step 502: The third relay device queries cluster information of each relay device cluster of at least one relay device cluster corresponding to the network device.

In some embodiments of this application, the third relay device may obtain the cluster information of each relay device cluster by querying capability information and signal information of each relay device in each relay device cluster and information about UE that has accessed the relay device cluster.

Step 503: The third relay device sends the cluster information of each relay device cluster to the network device.

Step 504: The network device receives the cluster information of each relay device cluster of the at least one relay device cluster from the third relay device, and determines, in the relay device cluster based on the cluster information of each relay device cluster, a first relay device cluster that matches a network state of the network device.

Step 505: The network device sends cluster information of the first relay device cluster to the third relay device.

Step 506: The third relay device receives the cluster information of the first relay device cluster from the network device, and sends the cluster information of the first relay device cluster to the target UE.

Step 507: The target UE receives the cluster information of the first relay device cluster from the third relay device.

Step 508: The target UE accesses a first relay device in the first relay device cluster, and sends a data packet to the network device by using the first relay device.

Step 509: The first relay device receives the data packet sent by the target UE; and sends a second data packet to the network device, and sends a third data packet to the network device by using the second relay device in a case that a quantity of first data packets sent by the target UE exceeds a first threshold.

It may be understood that, the first data packet includes the second data packet and the third data packet, and the second relay device is at least one of other relay devices except the first relay device in the first relay device.

In this way, in a case that a quantity of data packets accumulated in the first relay device exceeds the first threshold, a plurality of relay devices in the first relay device cluster in which the first relay device is located may cooperate to jointly transmit a data packet to the network device or the target UE. Therefore, a rate of cooperatively transmitting a data packet by using a relay device can be improved, and a delay of data transmission can be reduced, to improve efficiency of data transmission between the UE and the network device.

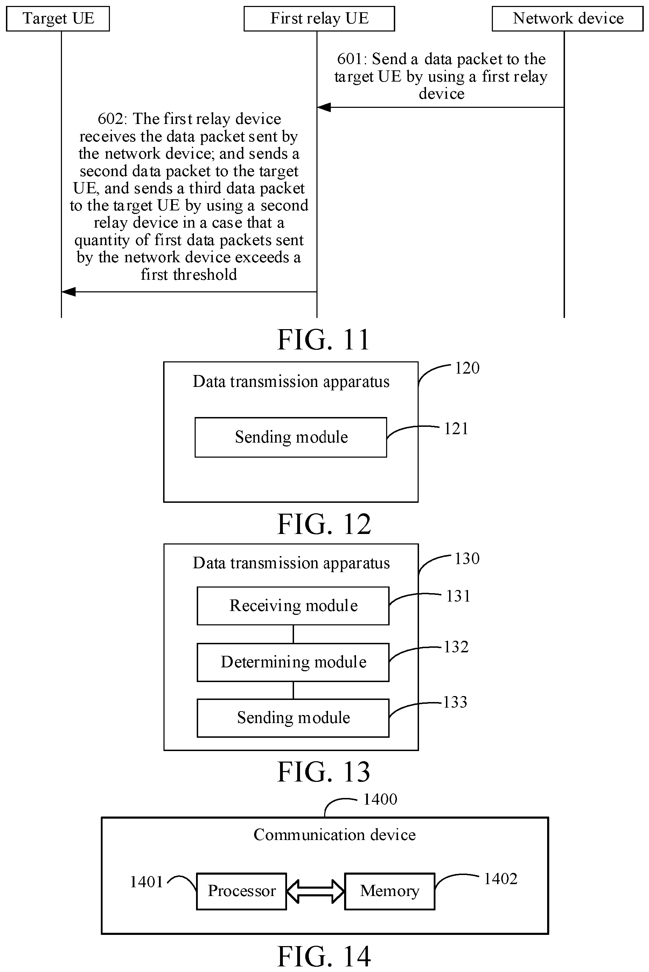

Embodiment 2: An example in which a data packet sending device is a network device and a target device is target UE is used. As shown in FIG. 11, the data transmission method may include the following step 601 and step 602.

Step 601: The network device sends a data packet to the target UE by using a first relay device.

Step 602: The first relay device receives the data packet sent by the network device; and sends a second data packet to the target UE, and sends a third data packet to the target UE by using a second relay device in a case that a quantity of first data packets sent by the network device exceeds a first threshold.

In this way, because the network device may determine, in at least one corresponding relay device cluster, a relay device cluster that matches a network state of the network device, so that the target UE and the network device may perform data transmission by using the relay device cluster. Therefore, that the target UE and the network device perform data transmission by using a relay device cluster with poor signal quality or a low transmission rate can be avoided, to improve efficiency of data transmission between the UE and the network device.

The data transmission method provided in this embodiment of this application may be executed by a data transmission apparatus. In embodiments of this application, the data transmission apparatus provided in embodiments of this application is described by using a method for performing data transmission by the data transmission apparatus as an example.

An embodiment of this application further provides a data transmission apparatus 120. As shown in FIG. 12, the data transmission apparatus 120 includes a sending module 121.

The sending module 121 is configured to: send a second data packet to a target device, and send a third data packet to the target device by using a second relay device in a case that a quantity of first data packets exceeds a first threshold. A first relay device is a relay device in a first relay device cluster, the first relay device cluster includes N relay devices, the target device includes a network device or target UE corresponding to the first relay device cluster, and N is an integer greater than 1. The first data packet is a data packet accumulated in the first relay device, and the first data packet includes the second data packet and the third data packet. The second relay device is a relay device in the first relay device cluster, and the second relay device is different from the first relay device.

In a possible implementation, the sending module 121 is specifically configured to: send the second data packet to the target device, and send the third data packet to the target device by using the second relay device in a case that a rate at which the first relay device sends a data packet to the target device is less than a second threshold and the quantity of first data packets exceeds the first threshold.

In a possible implementation, the network device corresponds to at least one relay device cluster, and the first relay device cluster is one of the at least one relay device cluster.

In a possible implementation, the target device includes the target UE.

The apparatus further includes: a receiving module.

The receiving module is configured to: before that the sending module 121 sends a second data packet to a target device, and sends a third data packet to the target device by using a second relay device in a case that a quantity of first data packets exceeds a first threshold, receive a data packet sent by the network device, where the first data packet further includes the data packet that is received by the first relay device and that is sent by the network device.

In a possible implementation, the target device includes the network device.

The receiving module is configured to: before that the sending module 121 sends a second data packet to a target device, and sends a third data packet to the target device by using a second relay device in a case that a quantity of first data packets exceeds a first threshold, receive a data packet sent by the target UE, where the first data packet further includes the data packet that is received by the first relay device and that is sent by the target UE.

This embodiment of this application provides the data transmission apparatus. In a case that the quantity of data packets accumulated in the first relay device exceeds the first threshold, a plurality of relay devices in the first relay device cluster in which the first relay device is located may cooperate to jointly transmit a data packet to the network device or the target UE. Therefore, a rate of cooperatively transmitting a data packet by using a relay device can be improved, and a delay of data transmission can be reduced, to improve efficiency of data transmission between the UE and the network device.

An embodiment of this application further provides a data transmission apparatus 130. As shown in FIG. 13, the data transmission apparatus 130 includes: a receiving module 131, a determining module **1**32, and a sending module 133.

The receiving module 131 is configured to: receive cluster information of at least one relay device cluster from a third relay device, where the at least one relay device cluster corresponds to a network device. The determining module 132 is configured to: determine, in the at least one relay device cluster based on cluster information of each relay device cluster received by the receiving module 131, a first relay device cluster that matches a network state of the network device. The sending module 133 is configured to: send, to target UE by using the third relay device, cluster information of the first relay device cluster determined by the determining module 132. The first relay device cluster includes N relay devices, the cluster information of the first relay device cluster is used to indicate the target UE to access a first relay device in the first relay device cluster, and N is an integer greater than 1.

In a possible implementation, the cluster information of the relay device cluster includes at least one of the following:
capability information of a relay device cluster;
signal information of a relay device cluster; and
information about UE that has accessed the relay device cluster.

The capability information is used to indicate at least one of the following:
whether the relay device cluster supports a network transmitting a fourth data packet, where the fourth data packet is a data packet transmitted between the target UE and the network device; and
whether the relay device cluster supports a frequency band in which the fourth data packet is transmitted.

In a possible implementation, the third relay device is a relay device in a second relay device cluster, the second relay device cluster includes M relay devices, and M is an integer greater than 1.

The sending module 133 is specifically configured to: send the cluster information of the first relay device cluster to the target UE by using the third relay device in a case that the target UE accesses the third relay device.

The apparatus further includes: a transmission module.

The transmission module is configured to: after that the sending module 133 sends the cluster information of the first relay device cluster to the target UE by using the third relay device in a case that the target UE accesses the third relay device, perform transmission of a data packet with the target UE by using the first relay device.

In a possible implementation, the receiving module 131 is specifically configured for the network device to periodically receive the cluster information of the at least one relay device cluster from the third relay device.

This embodiment of this application provides the data transmission apparatus. The network device may determine, in at least one corresponding relay device cluster, the relay device cluster that matches the network state of the network device, so that the target UE and the network device may perform data transmission by using the relay device cluster. Therefore, that the target UE and the network device perform data transmission by using a relay device cluster with poor signal quality or a low transmission rate can be avoided, to improve efficiency of data transmission between the UE and the network device.

The data transmission apparatus in this embodiment of this application may be an electronic device, for example, an electronic device having an operating system, or may be a component, such as an integrated circuit or a chip, in an electronic device. The electronic device may be a terminal, or may be another device other than a terminal. For example, the terminal may include, but is not limited to, the types of the terminal 11 listed above, and the another device may be a server, a network attached storage (Network Attached Storage, DNS), or the like. This is not specifically limited in this embodiment of this application.

The data transmission apparatus provided in this embodiment of this application can implement processes implemented in the foregoing data transmission method embodiments and achieve same technical effects. To avoid repetition, details are not described herein again.

As shown in FIG. 14, an embodiment of this application further provides a communication device 1400, including a processor 1401 and a memory 1402. The memory 1402 stores a program or an instruction that can run on the processor 1401. For example, when the communication device 1400 is a first relay device, the program or the instruction implements, when executed by the processor 1401, steps of the foregoing data transmission method embodiments, and same technical effects can be achieved. When the communication device 1400 is a network device, the program or instruction implements, when executed by the processor 1401, steps of the foregoing data transmission method embodiments, and same technical effects can be achieved. To avoid repetition, details are not described herein again.

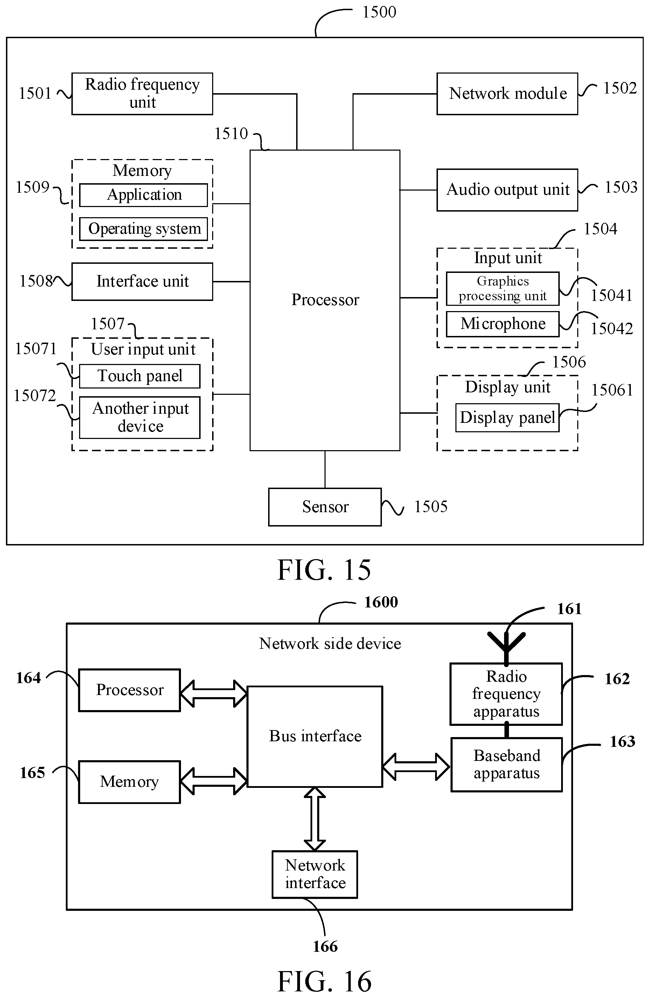

An embodiment of this application further provides a relay device, including a processor and a communication interface. The communication interface is coupled to the processor, and the processor is configured to run a program or an instruction, to implement steps in the method embodiment shown in FIG. 3. The terminal embodiment corresponds to the foregoing method embodiment on the relay device side. Implementation processes and implementations of the foregoing method embodiment are applicable to the terminal embodiment, and same technical effects can be achieved. Specifically, FIG. 15 is a schematic diagram of a hardware structure of UE according to an embodiment of this application.

The relay device 1500 includes, but is not limited to, at least some components such as a radio frequency unit 1501, a network module 1502, an audio output unit 1503, an input unit 1504, a sensor 1505, a display unit 1506, a user input unit 1507, an interface unit 1508, a memory 1509, and a processor 151**0**.

A person skilled in the art may understand that the terminal 1500 may further include a power supply (such as a battery) for supplying power to the components. The power supply may be logically connected to the processor 1510 by using a power management system, to implement functions such as charging management, discharging management, and power consumption management by using the power management system. The structure of the terminal shown in FIG. 15 does not constitute any limitation on the terminal, and the terminal may include more or fewer components than shown in the diagram, or combine some of the components, or have different arrangements of the components. Details are not described herein again.

It should be understood that, in this embodiment of this application, the input unit 1504 may include a graphics processing unit (Graphics Processing Unit, GPU) 15041 and a microphone 15042. The graphics processing unit 15041 processes image data of a static picture or a video that is obtained by an image capture apparatus (such as a camera) in a video capture mode or an image capture mode. The display unit 1506 may include a display panel 15061. The display panel 15061 may be configured by using a liquid crystal display, an organic light-emitting diode, or the like. The user input unit 1507 includes at least one of a touch panel 15071 and another input device 15072. The touch panel 15071 is also referred to as a touchscreen. The touch panel 15071 may include two parts: a touch detection apparatus and a touch controller. The another input device 15072 may include, but is not limited to, a physical keyboard, a functional key (such as a volume control key or a power on/off key), a trackball, a mouse, and a joystick. Details are not described herein again.

In this embodiment of this application, after receiving downlink data from a network device, the radio frequency unit 1501 may transmit the downlink data to the processor 1510 for processing. In addition, the radio frequency unit 1501 may send uplink data to the network device. Generally, the radio frequency unit 1501 includes, but is not limited to, an antenna, an amplifier, a transceiver, a coupler, a low noise amplifier, a duplexer, and the like.

The memory 1509 may be configured to store a software program or instruction and various data. The memory 1509 may mainly include a first storage area storing the program or instruction and a second storage area storing the data. The first storage area may store an operating system, an application program or instruction required by at least one function (such as a sound playback function and an image playback function), and the like. In addition, the memory 1509 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 1509 in this embodiment of this application includes but is not limited to these memories and any other suitable types of memories.

The processor 1510 may include one or more processing units. Optionally, the processor 1510 integrates an application processor and a modem. The application processor mainly processes operations related to an operating system, a user interface, an application, and the like. The modem mainly processes a wireless communication signal, for example, a baseband processor. It may be understood that, the foregoing modem may not be integrated into the processor 1510.

The radio frequency unit 1501 is configured to: send a second data packet to a target device, and send a third data packet to the target device by using a second relay device in a case that a quantity of first data packets exceeds a first threshold. A first relay device is a relay device in a first relay device cluster, the first relay device cluster includes N relay devices, the target device includes a network device or target UE corresponding to the first relay device cluster, and N is an integer greater than 1. The first data packet is a data packet accumulated in the first relay device, and the first data packet includes the second data packet and the third data packet. The second relay device is a relay device in the first relay device cluster, and the second relay device is different from the first relay device.

In a possible implementation, the radio frequency unit 1501 is specifically configured to: send the second data packet to the target device, and send the third data packet to the target device by using the second relay device in a case that a rate at which the first relay device sends a data packet to the target device is less than a second threshold and the quantity of first data packets exceeds the first threshold.

In a possible implementation, the network device corresponds to at least one relay device cluster, and the first relay device cluster is one of the at least one relay device cluster.

In a possible implementation, the target device includes the target UE.

The radio frequency unit 1501 is configured to: before that the radio frequency unit 1501 sends a second data packet to a target device, and sends a third data packet to the target device by using a second relay device in a case that a quantity of first data packets exceeds a first threshold, receive a data packet sent by the network device, where the first data packet further includes the data packet that is received by the first relay device and that is sent by the network device.

In a possible implementation, the target device includes the network device.

The radio frequency unit 1501 is configured to: before that the radio frequency unit 1501 sends a second data packet to a target device, and sends a third data packet to the target device by using a second relay device in a case that a quantity of first data packets exceeds a first threshold, receive a data packet sent by the target UE, where the first data packet further includes the data packet that is received by the first relay device and that is sent by the target UE.

An embodiment of this application provides a relay device. In a case that a quantity of data packets accumulated in a first relay device exceeds a first threshold, a plurality of relay devices in a first relay device cluster in which the first relay device is located may cooperate to jointly transmit a data packet to a network device or target UE. Therefore, a rate of cooperatively transmitting a data packet by using a relay device can be improved, and a delay of data transmission can be reduced, to improve efficiency of data transmission between UE and the network device.

It may be understood that, for implementation processes of the implementations mentioned in this embodiment, refer to related descriptions in embodiments of the data transmission method, and a same or corresponding technical effect is achieved. To avoid repetition, details are not described herein again.

An embodiment of this application further provides a network device, including a processor and a communication interface. The communication interface is coupled to the processor, and the processor is configured to run a program or an instruction, to implement steps in the method embodiment shown in FIG. 7. The network device embodiment corresponds to the foregoing network device method embodiment. Implementation processes and implementations of the foregoing method embodiment may be applicable to the network device embodiment, and same technical effects can be achieved.

Specifically, an embodiment of this application further provides a network device. As shown in FIG. 16, the network device 1600 includes: an antenna 161, a radio frequency apparatus 162, a baseband apparatus 163, a processor 164, and a memory 165. The antenna 161 is connected to the radio frequency apparatus 162. In an uplink direction, the radio frequency apparatus 162 receives information through the antenna 161, and sends the received information to the baseband apparatus 163 for processing. In a downlink direction, the baseband apparatus 163 processes to-be-sent information, and sends the information to the radio frequency apparatus 162; and the radio frequency apparatus 162 processes the received information and then sends the information out through the antenna 161.

The method performed by the network device in the foregoing embodiment may be implemented in the baseband apparatus 163, and the baseband apparatus 163 includes a baseband processor.

For example, the baseband apparatus 163 may include at least one baseband board. A plurality of chips are disposed on the baseband board. As shown in FIG. 16, one of the chips is, for example, a baseband processor, and is connected to the memory 165 through a bus interface, to invoke a program in the memory 165, so as to perform the network device operations shown in the foregoing method embodiments.

The network device may further include a network interface 166. The interface is, for example, a common public radio interface (Common Public Radio Interface, CPRI).

Specifically, the network device 1600 according to this embodiment of the present invention further includes an instruction or a program that is stored in the memory 165 and that can run on the processor 164. The processor 164 invokes the instruction or the program in the memory 165 to perform the method performed by the modules shown in FIG. 7, and same technical effects are achieved. To avoid repetition, details are not described herein again.

An embodiment of this application further provides a readable storage medium. The readable storage medium stores a program or an instruction. When the program or the instruction is executed by a processor, processes of the foregoing data transmission method embodiments are implemented, and same technical effects can be achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor, and the processor is configured to run a program or an instruction, to implement processes of the foregoing data transmission method embodiments, and same technical effects can be achieved. To avoid repetition, details are not described herein again.

It should be understood that, the chip in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes of the foregoing data transmission method embodiments, and same technical effects are achieved. To avoid repetition, details are not described herein again.

An embodiment of this application further provides a data transmission system, including UE and a network device. The terminal is configured to perform steps of the foregoing data transmission method, and the network device is configured to perform steps of the foregoing data transmission method described.

It should be noted that, in this specification, the term "include", "contain", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a ..." does not preclude existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by a computer software product in addition to a necessary universal hardware platform or by hardware only. The computer software product is stored in a storage medium (such as a ROM, a RAM, a magnetic disk, or an optical disc), and includes several instructions for instructing a terminal or a network device to perform the method described in the embodiments of this application.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may make implementations in many forms without departing from the purposes of this application and the protection scope of the claims, and all the implementations shall fall within the protection of this application.

## Claims

1. A data transmission method, wherein the method comprises:
sending, by a first relay device, a second data packet to a target device, and sending a third data packet to the target device by using a second relay device in a case that a quantity of first data packets exceeds a first threshold, wherein
the first relay device is a relay device in a first relay device cluster, the first relay device cluster comprises N relay devices, the target device comprises a network device or target user equipment UE corresponding to the first relay device cluster, and N is an integer greater than 1;
the first data packet is a data packet accumulated in the first relay device, and the first data packet comprises the second data packet and the third data packet; and
the second relay device is a relay device in the first relay device cluster, and the second relay device is different from the first relay device.

2. The method according to claim 1, wherein the sending, by a first relay device, a second data packet to a target device, and sending a third data packet to the target device by using a second relay device in a case that a quantity of first data packets exceeds a first threshold comprises:
sending, by the first relay device, the second data packet to the target device, and sending the third data packet to the target device by using the second relay device in a case that a rate at which the first relay device sends a data packet to the target device is less than a second threshold and the quantity of first data packets exceeds the first threshold.

3. The method according to claim 1, wherein the network device corresponds to at least one relay device cluster, and the first relay device cluster is one of the at least one relay device cluster.

4. The method according to any one of claims 1 to 3, wherein the target device comprises the target UE; and
before the sending, by a first relay device, a second data packet to a target device, and sending a third data packet to the target device by using a second relay device in a case that a quantity of first data packets exceeds a first threshold, the method further comprises:
receiving, by the first relay device, a data packet sent by the network device, wherein the first data packet further comprises the data packet that is received by the first relay device and sent by the network device.

5. The method according to any one of claims 1 to 3, wherein the target device comprises the network device; and
before the sending, by a first relay device, a second data packet to a target device, and sending a third data packet to the target device by using a second relay device in a case that a quantity of first data packets exceeds a first threshold, the method further comprises:
receiving, by the first relay device, a data packet sent by the target UE, wherein the first data packet further comprises the data packet that is received by the first relay device and sent by the target UE.

6. A data transmission method, wherein the method comprises:
receiving, by a network device, cluster information of at least one relay device cluster from a third relay device, wherein the at least one relay device cluster corresponds to the network device;
determining, by the network device in the at least one relay device cluster based on cluster information of each relay device cluster, a first relay device cluster that matches a network state of the network device; and
sending, by the network device, cluster information of the first relay device cluster to target UE by using the third relay device, wherein
the first relay device cluster comprises N relay devices, the cluster information of the first relay device cluster is used to indicate the target UE to access a first relay device in the first relay device cluster, and N is an integer greater than 1.

7. The method according to claim 6, wherein
the cluster information of the relay device cluster comprises at least one of the following:
capability information of the relay device cluster;
signal information of the relay device cluster; and
information about UE that has accessed the relay device cluster; and
the capability information is used to indicate at least one of the following:
whether the relay device cluster supports a network transmitting a fourth data packet, wherein the fourth data packet is a data packet transmitted between the target UE and the network device; and
whether the relay device cluster supports a frequency band in which the fourth data packet is transmitted.

8. The method according to claim 7, wherein the third relay device is a relay device in a second relay device cluster, the second relay device cluster comprises M relay devices, and M is an integer greater than 1; and
the sending, by the network device, cluster information of the first relay device cluster to target UE by using the third relay device comprises:
sending, by the network device, the cluster information of the first relay device cluster to the target UE by using the third relay device in a case that the target UE accesses the third relay device; and
after the sending, by the network device, the cluster information of the first relay device cluster to the target UE by using the third relay device in a case that the target UE accesses the third relay device, the method further comprises:
performing, by the network device, transmission of a data packet with the target UE by using the first relay device.

9. The method according to claim 6, wherein the receiving, by a network device, cluster information of at least one relay device cluster from a third relay device comprises:
periodically receiving, by the network device, the cluster information of the at least one relay device cluster from the third relay device.

10. A data transmission apparatus, wherein the apparatus comprises: a sending module; and
the sending module is configured to: send a second data packet to a target device, and send a third data packet to the target device by using a second relay device in a case that a quantity of first data packets exceeds a first threshold, wherein
a first relay device is a relay device in a first relay device cluster, the first relay device cluster comprises N relay devices, the target device comprises a network device or target UE corresponding to the first relay device cluster, and N is an integer greater than 1;
the first data packet is a data packet accumulated in the first relay device, and the first data packet comprises the second data packet and the third data packet; and
the second relay device is a relay device in the first relay device cluster, and the second relay device is different from the first relay device.

11. The apparatus according to claim 10, wherein the sending module is specifically configured to: send the second data packet to the target device, and send the third data packet to the target device by using the second relay device in a case that a rate at which the first relay device sends a data packet to the target device is less than a second threshold and the quantity of first data packets exceeds the first threshold.

12. The apparatus according to claim 10, wherein the network device corresponds to at least one relay device cluster, and the first relay device cluster is one of the at least one relay device cluster.

13. The apparatus according to any one of claims 10 to 12, wherein the target device comprises the target UE;
the apparatus further comprises: a receiving module; and
the receiving module is configured to: before that the sending module sends a second data packet to a target device, and sends a third data packet to the target device by using a second relay device in a case that a quantity of first data packets exceeds a first threshold, receive a data packet sent by the network device, wherein the first data packet further comprises the data packet that is received by the first relay device that is sent by the network device.

14. The apparatus according to any one of claims 10 to 12, wherein the target device comprises the network device; and
the apparatus further comprises: a receiving module; and
the receiving module is configured to: before that the sending module sends a second data packet to a target device, and sends a third data packet to the target device by using a second relay device in a case that a quantity of first data packets exceeds a first threshold, receive a data packet sent by the target UE, wherein the first data packet further comprises the data packet that is received by the first relay device and that is sent by the target UE.

15. A data transmission apparatus, wherein the apparatus comprises: a receiving module, a determining module, and a sending module;
the receiving module is configured to: receive cluster information of at least one relay device cluster from a third relay device, wherein the at least one relay device cluster corresponds to a network device;
the determining module is configured to: determine, in the at least one relay device cluster based on cluster information of each relay device cluster received by the receiving module, a first relay device cluster that matches a network state of the network device; and
the sending module is configured to: send, to target UE by using the third relay device, cluster information of the first relay device cluster determined by the determining module, wherein
the first relay device cluster comprises N relay devices, the cluster information of the first relay device cluster is used to indicate the target UE to access a first relay device in the first relay device cluster, and N is an integer greater than 1.

16. The apparatus according to claim 15, wherein
the cluster information of the relay device cluster comprises at least one of the following:
capability information of the relay device cluster;
signal information of the relay device cluster; and
information about UE that has accessed the relay device cluster; and
the capability information is used to indicate at least one of the following:
whether the relay device cluster supports a network transmitting a fourth data packet, wherein the fourth data packet is a data packet transmitted between the target UE and the network device; and
whether the relay device cluster supports a frequency band in which the fourth data packet is transmitted.

17. The apparatus according to claim 16, wherein the third relay device is a relay device in a second relay device cluster, the second relay device cluster comprises M relay devices, and M is an integer greater than 1;
the sending module is specifically configured to: send the cluster information of the first relay device cluster to the target UE by using the third relay device in a case that the target UE accesses the third relay device;
the apparatus further comprises a transmission module;
the transmission module is configured to: after that the sending module sends the cluster information of the first relay device cluster to the target UE by using the third relay device in a case that the target UE accesses the third relay device, perform transmission of a data packet with the target UE by using the first relay device.

18. The apparatus according to claim 15, wherein the receiving module is specifically configured for the network device to periodically receive the cluster information of the at least one relay device cluster from the third relay device.

19. A relay device, comprising a processor and a memory, wherein the memory stores a program or an instruction that is executable on the processor, and the program or the instruction, when executed by the processor, implements steps of the data transmission method according to any one of claims 1 to 5.

20. A network device, comprising a processor and a memory, wherein the memory stores a program or an instruction that is executable on the processor, and the program or the instruction, when executed by the processor, implements steps of the data transmission method according to any one of claims 6 to 9.

21. A readable storage medium, wherein the readable storage medium stores a program or an instruction, and the program or the instruction, when executed by a processor, implements steps of the data transmission method according to any one of claims 1 to 5, or implements steps of the data transmission method according to any one of claims 6 to 9.

22. A chip, wherein the chip comprises a processor and a communication interface, the communication interface is coupled to the processor, and the processor is configured to run a program or an instruction, to implement steps of the data transmission method according to any one of claims 1 to 5, or implement steps of the data transmission method according to any one of claims 6 to 9.

23. A computer program product, wherein the computer program product is executed by at least one processor, to implement steps of the data transmission method according to any one of claims 1 to 5, or implement steps of the data transmission method according to any one of claims 6 to 9.

24. An electronic device, wherein the electronic device is configured to perform steps of the data transmission method according to any one of claims 1 to 5, or perform steps of the data transmission method according to any one of claims 6 to 9.
